# EUROPEAN PATENT SPECIFICATION

(11) **EP 3 627 313 B1**
(45) Date of publication and mention of the grant of the patent: **07.06.2023**
(21) Application number: 19198387.3
(22) Date of filing: 19.09.2019
(51) Int. Cl.: G06F 8/38, G06F 9/451, G06F 9/445, G06F 3/048

(54) **METHOD AND SYSTEM FOR OPERATING A SOFTWARE APPLICATION ON A PROCESSOR OF A MOBILE DEVICE**
VERFAHREN UND SYSTEM ZUM BETREIBEN EINER SOFTWARE-ANWENDUNG AUF EINEM PROZESSOR EINER MOBILEN VORRICHTUNG
PROCÉDÉ ET SYSTÈME DE FONCTIONNEMENT D'UNE APPLICATION LOGICIELLE SUR UN PROCESSEUR DE DISPOSITIF MOBILE

(30) Priority: 24.09.2018 CH 11552018
(43) Date of publication of application: 25.03.2020
(73) Proprietor: Quadient Group AG, 9050 Appenzell (CH)
(72) Inventor: KNOULICH, Jan, 50009 Hradec Kralove 9 (CZ); GHIO, Laurent, 92330 Sceaux (FR); HEMON-LAURENS, Antoine, 44100 Nantes (FR); DRAEGER, Scott, Plainfield, Illinois, 60585 (US)
(74) Representative: Rentsch Partner AG

(56) References cited:
- US-A1- 2013 212 487
- US-A1- 2017 262 164

## Description

### Field of the Invention

The present invention relates to a computer implemented method and a computer system for operating a software application on a processor of a communication device. Specifically, the present invention relates to a computer implemented method for operating the software application on a processor of a communication device, and to a communication device comprising the software application and a processor.

### Background of the Invention

In many situations, there is a need to provide user interfaces for software applications that are tailored to the needs of specific users. A single generic user interface, and the user interface code which generates it and governs how it responds to user interaction, cannot meet the needs of all users. Improved specific user interfaces are needed such that particular users can access and interact with software applications efficiently. These improved user interfaces may improve legibility, such that the user interface is tailored for a particular language, script orientation, ortext size. The improved user interfaces may also make the software application more accessible for those users with disabilities, such as providing support for specialized input hardware enabling efficient interaction, or providing a user interface where voice commands are used to navigate and use the software application. Furthermore, software applications typically support many different functions, processes, and workflows, and there is often no particular one-size-fits all user interface which allows all processes and workflows to be undertaken with an efficiency that a user interface specifically tailored to a particular process may provide.

Changing language settings and font sizes in software applications is known in the art, and adding plug-ins to existing software applications, to provide additional functionality, is also known. Customizing user interfaces of desktop computer applications is also possible, for example by adding or removing tools in toolbars. These customizations are also more difficult to enable and undertake when dealing with the constraints of mobile applications designed for mobile communication devices, as user input possibilities are more limited, and screen size becomes a strongly limiting factor. Therefore mobile applications typically do not offer as many customization options as more traditional desktop applications. Furthermore, these customizations are known only to affect superficial and cosmetic changes to the user interfaces of software applications, and are not known to affect the underlying user interface code which can control workflows, and how the user interface reacts and interacts in response to user input.

The user interface code generates the user interface of a software application. The user interface code is typically coupled tightly with the function code of an application, sharing common software objects, dependencies, and libraries. Furthermore there is often an unclear delineation between those parts of the software application purely responsible for user interaction and defining processes and workflows, and those parts of the software containing the function code which includes domain logic of the application. Deploying alternate or updated user interface code remains cumbersome and inefficient as the entire software application has to be updated.

Customer journey mapping is known in the art of website analytics, with products and services on the market designed to aid companies in visualizing and analyzing the behavior of their customers when interacting with their websites. In particular, websites which feature online web shops may deploy customer journey mapping to record and analyze data on how customers navigate their web shops and fill in order forms, allowing them to classify their users into different categories and therefore more accurately target their customers. This information is used in the future development of their website, products, and services. However, changes are in their websites undertaken to improve the website functionality typically affect all users, regardless of which category a particular customer may fall into.

US 2013/212487 A1 describes transforming the framework and content of webpages, via DPCL (Dynamic Page Content and Layouts) components, in response to user browsing activities.

US 2017/262164 describes an application for a mobile device which can automatically personalize its interface and content for a user, wherein reconfiguration of a user interface may be based on various factors and the adjustments made to the user interface of an application can be performed automatically and without any explicit user action.

### Summary of the Invention

It is an object of this invention to provide a computer implemented method and a computer system for operating a software application on a processor of a communication device. In particular, it is an object of the present invention to provide a computer implemented method for operating the software application on a processor of a communication device, and a communication device comprising the software application and a processor.

According to the present invention, these objects are achieved through the features of the independent claims. In addition, further advantageous embodiments follow from the dependent claims and the description.

According to the present invention, the above-mentioned objects are particularly achieved in a computer implemented method for operating a software application on a processor of a communication device, in which the software application is installed on the communication device. The software application comprises application function code and user interface code, the user interface code being configured to control the processor of the communication device to implement a user interface for a user to interact with the software application executing on the processor of the communication device. The user interface comprises different forms, layouts and pages, guiding the user through specific business processes in a structured manner as defined by the user interface code. The user interface code is coupled with the separately compiled application function code and executed by the processor in a separate process such that the user interface code is replaceable with alternative user interface code, without requiring a recompilation of the application function code. The alternative user interface code for the software application executes on the processor of the communication device with an alternative user interface implemented by the alternative user interface code. The method further comprises installing and executing on the processor of the communication device a customer journey tracking software, the customer journey tracking code recording user interaction with the software application through the user interface implemented by the user interface code. Alternative user interface code is determined using the user interaction recorded by the customer journey tracking software. The method further comprises installing and executing the alternative user interface code on the processor of the communication device for implementing an alternative user interface for the user to interact with the software application, wherein the alternative user interface includes reordered user interface elements, workflow and processes, and adjusted and altered page layouts, such as to achieve for the user a more efficient interaction with the software application.

In an embodiment, determining alternative user interface code comprises transmitting the user interaction recorded by the customer journey tracking code from the communication device via a telecommunications network to a cloud-based computer system. The cloud-based computer system determines alternative user interface code, using the user interaction received from the communication device and transmits the alternative user interface code from the cloud-based computer system to the communication device.

In an embodiment, determining the alternative user interface code in the cloud-based computer system comprises the cloud-based computer system determining a user interface type for the user interaction received from the communication device, and transmitting alternative user interface code associated with the user interface type from the cloud-based computer system to the communication device.

In a further embodiment, the method further comprises the cloud-based computer system storing a log of transmitting alternative user interface code to the communication device of a user.

In an embodiment the method further comprises storing in the communication device a plurality of modules comprising alternative user interface code, and installing and executing on the processor of the communication device a recommendation code. Determining alternative user interface code comprises the recommendation code selecting the alternative user interface code from the plurality of modules with alternative user interface code, using the user interaction recorded by the customer journey tracking software.

In an embodiment the method further comprises including the customer journey tracking code in the application function code of the software application. Installing the customer journey tracking code is included in installing the software application on the communication device.

In an embodiment the method further comprises determining disabilities of the user which impair the user's interaction with the software application through the user interface and determining the alternative user interface code includes taking into consideration the disabilities of the user determined.

In an embodiment, recording user interaction comprises the customer journey tracking code detecting and storing timing of user interaction commands and types of user interaction commands through the user interface.

In addition to a computer implemented method for operating a software application on a processor of a mobile device, the present invention also relates to a communication device comprising a processor and software application installed on the communication device, the software application comprising application function code and user interface code, the user interface code being configured to control the processor of the communication device to implement a user interface for a user to interact with the software application executing on the processor of the communication device. The user interface comprises different forms, layouts and pages, guiding the user through specific business processes in a structured manner as defined by the user interface code. The user interface code is coupled with the separately compiled application function code and executed by the processor in a separate process such that the user interface code is replaceable with alternative user interface code, without requiring a recompilation of the application function code and the alternative user interface code for the software application executes on the processor of the communication device with an alternative user interface implemented by the alternative user interface code. The processor of the communication device is further configured to record user interaction with the software application through the user interface implemented by the user interface code, the recorded user interaction making it possible to determine alternative user interface code for controlling the processor of the communication device to implement an alternative user interface for the user to interact with the software application, wherein the alternative user interface includes reordered user interface elements, workflow and processes, and adjusted and altered page layouts, such as to achieve for the user a more efficient interaction with the software application.

In a further embodiment the processor is further configured to transmit the recorded user interaction via a telecommunications network to a cloud-based computer system. The processor is further configured to receive from the cloud-based computer system the alternative user interface code, determined by the cloud-based computer system based on the user interaction and installs the alternative user interface code received from the cloud-based computer system in the communication device.

In an embodiment the communication device further comprises a plurality of modules comprising alternative user interface code. The processor is further configured to select the alternative user interface code from the plurality of modules with alternative user interface code, using the recorded user interaction.

In an embodiment the processor is further configured to determine disabilities of the user which impair the user's interaction with the software application through the user interface and determine the alternative user interface code further taking into consideration the disabilities of the user determined.

In an embodiment the processor is configured to record the user interaction by detecting and storing timing of user interaction commands and types of user interaction commands through the user interface.

In addition to a computer implemented method for operating a software application on a processor of a mobile device, and a communication device, the present invention also relates to a computer program product comprising a non-transient computer-readable medium having stored therein computer program code configured to control a processor of a communication device such that the communication device installs a software application on the communication device, the software application comprising application function code and user interface code, the user interface code being configured to control the processor to implement a user interface for a user to interact with the software application executing on the processor of the communication device, the user interface comprising different forms, layouts and pages, guiding the user through specific business processes in a structured manner as defined by the user interface code, and the user interface code being coupled with the separately compiled application function code and executed by the processor in a separate process such that the user interface code is replaceable with alternative user interface code, without requiring a recompilation of the application function code and the alternative user interface code for the software application to execute on the processor of the communication device with an alternative user interface implemented by the alternative user interface code; and that the communication device records user interaction with the software application through the user interface implemented by the user interface code, the recorded user interaction making it possible to determine alternative user interface code for controlling the processor of the communication device to implement an alternative user interface for the user to interact with the software application, wherein the alternative user interface includes reordered user interface elements, workflow and processes, and adjusted and altered page layouts, such as to achieve for the user a more efficient interaction with the software application.

In an embodiment, the computer program product has stored on the non-transient computer-readable medium further computer program code configured to control the processor such that the communication device transmits the recorded user interaction via a telecommunications network to a cloud-based computer system and that the communication device receives from the cloud-based computer system the alternative user interface code, determined by the cloud-based computer system based on the user interaction; and that the communication device installs the alternative user interface code received from the cloud-based computer system in the communication device.

In an embodiment, the computer program product has stored on the non-transient computer-readable medium further computer program code configured to control the processor such that the communication device stores a plurality of modules comprising alternative user interface code; and that the communication device selects the alternative user interface code from the plurality of modules with alternative user interface code, using the recorded user interaction.

### Brief Description of the Drawings

The present invention will be explained in more detail, by way of example, with reference to the drawings in which:
- Figure 1:: shows a block diagram illustrating schematically a communication device comprising a software application and a processor, a telecommunications network, and a cloud-based computer system.
- Figure 2:: shows a block diagram illustrating schematically a communication device with a user interface.
- Figure 3:: shows a flow diagram illustrating an exemplary sequence of steps for operating a software application on processor of a communication device.
- Figure 4:: shows a block diagram illustrating schematically a communication device comprising a software application and a processor, a telecommunications network, and a cloud-based computer system.
- Figure 5:: shows a flow diagram illustrating an exemplary sequence of steps for operating a software application on processor of a communication device.

### Detailed Description of the Preferred Embodiments

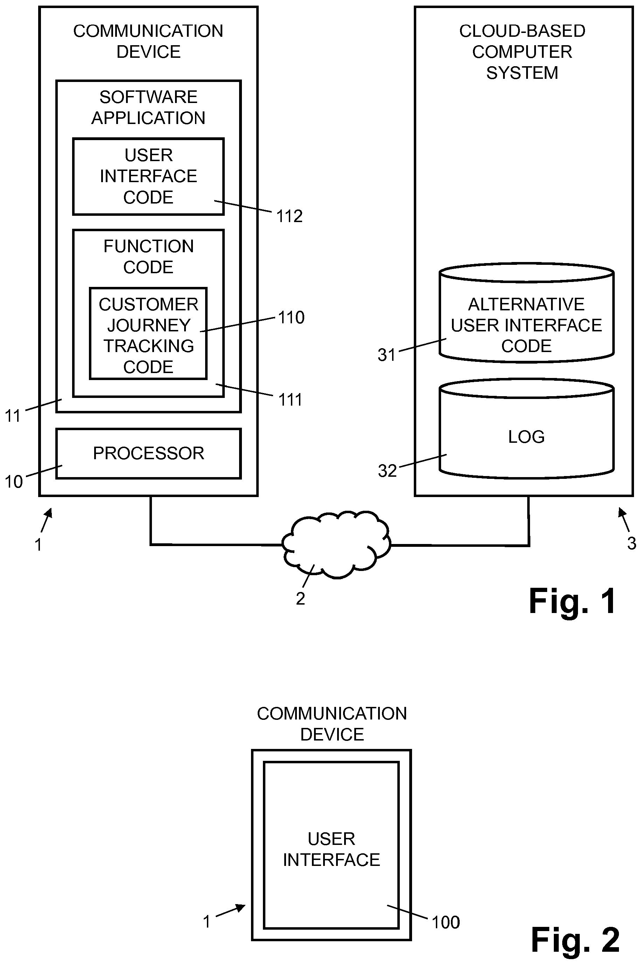

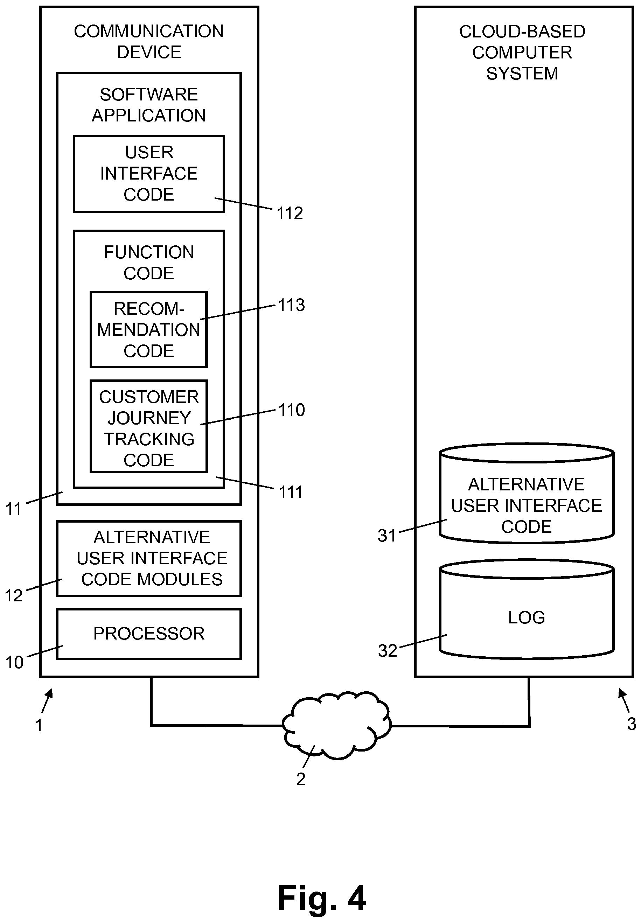

In Figures 1, 2, 3, 4, and 5, reference numeral 1 refers to a communication device. The communication device 1 may be a mobile phone, tablet, smart watch, a personal computer (PC), a laptop computer, or another computerized electronic device with a display for a visual user interface and a communication module, as outlined below in more detail. In Figures 1 and 4, reference numeral 2 refers to a telecommunications network, such as the Internet, for enabling data communication between a communication device 1 and a cloud-based computer system 3. For accessing the Internet, telecommunications network 2 comprises mobile radio networks, such as GSM (Global System for Mobile Communication) or UMTS (Universal Mobile Telecommunication System), WLAN (Wireless Local Area Network), and/or LAN (Local Area Network) networks.

As illustrated in Figures 1 and 4, the communication device 1 comprises a processor 10 and a software application 11. The communication device 1 further comprises a wireless communication module for communicating wirelessly with a cloud-based computer system 3 using the telecommunications network 2, and a display for displaying a user interface 100. The processor 10 may comprise of one or more general purpose processing cores (such as x86 cores or ARM cores) and processing cores designed to accelerate a particular type of computation (such as graphics or image processing). The software application 11 comprises function code 111 and user interface code 112. The software application 11 is executed by the processor 10 in a process, hereafter called the software application process. A process is an instance of a software application that is being executed by a processor. The software application process controls the processor 10 according to the code of the software application 11. The software application 11 is configured to control the processor 10 such that the processor 10 executes the function code 111 and the user interface code 112 each in a separate process, hereafter called the function code process and the user interface code process, respectively. The function code process executes the domain logic which determines how data can be created, processed, and stored. The domain logic further determines how business objects, such as accounts or inventories, interact with each other. The domain logic may further determine processes or workflows, such as the creation of a user account or the ordering of goods and services. The function code process further enables the communication between the function code process itself and the user interface code process, monitors the current status of both the function code process itself and the user interface code process, handles errors which may occur in the function code process itself or the user interface code process, and handles network connections between the software application process and telecommunications network 2. The user interface code process determines the data which the user interface 100 displays, determines how the user interface 100 reacts to user inputs, and enables data communication to and from the function code process, as detailed below.

The user interface process generates the user interface 100, as illustrated in Figure 2. The user interface 100 allows effective operation and control of the software application 11 by the user. The user interface 100 is the graphical and/or audio-visual interface with which the user interacts while using the software application 11. The user interface 100 is an input and output layer between the user and the user interface process, enabling the user to interact with the software application 11. The user interface 100 is capable of displaying text, graphics, video, sound, and interactive visualizations by using the communication device 1 hardware, such as a display screen and/or a speaker, and comprises elements such as indicator elements displaying data to the user, and control elements enabling the user to input data to the software application 11. How the user interface 100 reacts to a given user input, or which data or elements the user interface 100 presents to the user at a given time, is determined by the user interface process, in accordance with the user interface code 112. The user interface elements may also have mixed functionality, for instance a video player for displaying video to the user may respond to click inputs causing the video to pause. The user inputs data through input means, such as an on screen keyboard, a physical keyboard, a mouse, a digital pen, gestures, a microphone, and further input hardware that may be specific to the user's disability. The user interface 100 comprises different forms, layouts and pages, and guides the user through specific business processes in a structured manner as defined by the user interface process or user interface code, respectively. For instance a login screen may first require the user to input a username before displaying a second screen requiring the user to input a password. The user interface process, via the user interface 100, may further prompt the user to correct any incorrectly input data, provide further audio-visual feedback, display messages to the user to help the user complete the process, and display the progress through a business process.

During development of the software application 11, the function code 111 and the user interface code 112 are each compiled separately. The function code 111 and the user interface code 1 12 may each be a compiled to a container-type file or an archive-type file (e.g. an executable file, a tarball, or a compressed zip file) for distribution purposes comprising an executable binary along with additional resources such as library files or image files. The container-type file or archive-type file may correspond to a file-type required for a particular type of communication device 1. Alternatively, the container file or archive file may correspond to a type of file-type which is interpretable by a virtual machine (e.g. the Java Virtual Machine), by a framework (e.g. the Microsoft .NET Framework), or more generally by a hardware abstraction layer of an operating system which is common to a plurality of different types of communication devices 1 (e.g. the hardware abstraction layer of the mobile operating system Android).

The software application 11 comprises the compiled function code 111 and the compiled user interface code 112, each in a container-type file or an archive-type file. The separately compiled function code 111 and the user interface code 112 are executed by the processor 10 in separate processes, as described above. The function code process and the user interface code process communicate via protocols and/or interfaces. These protocols or interfaces may be specific to the platform on which the software application 11 is deployed. For instance on the mobile operating system Android, Android Apps can share data to each other using Intents and Streams. Similarly, on other operating systems, events exist which enable an application to share data with another applications, or for a given application to trigger a prompt in another application. The function code process and the user interface code process may transmit and receive data between them structured in a format such as JSON, or structured in a custom format comprising binary files. The transmitting and receiving of data between the function code process and the user interface code process may comprise transmitting and receiving terminated data messages, or transmitting and receiving data streams. The compiled user interface code 112 may be replaced by an alternative user interface code 31. The alternative user interface code 31 is executed by the processor 10 in a process called the alternative user interface code process. The alternative user interface code process uses the same communication protocols and interfaces as the user interface code process, enabling the software application 11 to seamlessly transition from using user interface code 112 to using alternative user interface code 31, without having to recompile the function code 111 or the software application 11. The function code process comprises a customer journey tracking code process, as defined by the customer journey tracking code 110. The customer journey tracking code process monitors and records how the user interacts with the software application 11. The data inputs the function code process receives via the user interface and the user interface code process are passed to the customer journey tracking code process which records them by saving a representation of the interaction to a file. The customer journey tracking code process evaluates them by comparing them to stored user behaviour and user interaction patterns and then transmits the recordings to a cloud-based computer system 3 via the telecommunications network 2.

In Figures 1, 3, 4, and 5, reference numeral 3 refers to a cloud-based computer system. The cloud-based computer system 3 may be a single physical computer comprising a processor, random access memory, data storage, and a communication module. The cloud-based computer system 3 may alternatively comprise a plurality of physical computers as above, or a virtual computer system on a cloud-computing platform, in which a physical computer system has added layers of abstraction to achieve greater flexibility, configurability, and responsiveness to demand. The cloud-based computer system 3 comprises alternative user interface code 31, and a log 32. The alternative user interface code 31 comprises a data file which, when transmitted to and installed on a communication device 1, enables a software application 11 to display an alternative graphical user interface to the user. The cloud-based computer system 3 stores a log 32 of transmitting the alternative user interface code 31 to the communication device 1. The log can be an entry in a file stored in the cloud-based computer system 3, or a database entry in a database on the cloud-based computer system 3. The log describes the transmission of alternative user interface code 31 to a communication device 31 and may comprise the following: an identifier of the alternative user interface code 31, the communication device 1 to which the alternative user interface code 31 was transmitted, the user of the communication device 1, details of the communication device 1 such as the particular model and make of the hardware, the particular software environment, language, location, and time-zone data, and the time of transmission. This enables the log 32 to be used for further data analysis, to assess which categories of users the alternative user interface code 31 was transmitted to, and to aid in the further development of alternative user interface code 31 tailored for particular user needs.

In Figure 4, reference numeral 12 refers to alternative user interface code modules which are stored on the communication device 1. Alternative user interface code modules 12 are installed in conjunction with the software application 11. Each alternative user interface code module 12 is precompiled. Reference numeral 113 refers to recommendation code. Recommendation code 113 controls the processor, such that the processor 10 generates recommendations of an alternative user interface or alternative user interface code modules from among the alternative user interface code modules 12, based on the records from the customer journey tracking code 110, as detailed below.

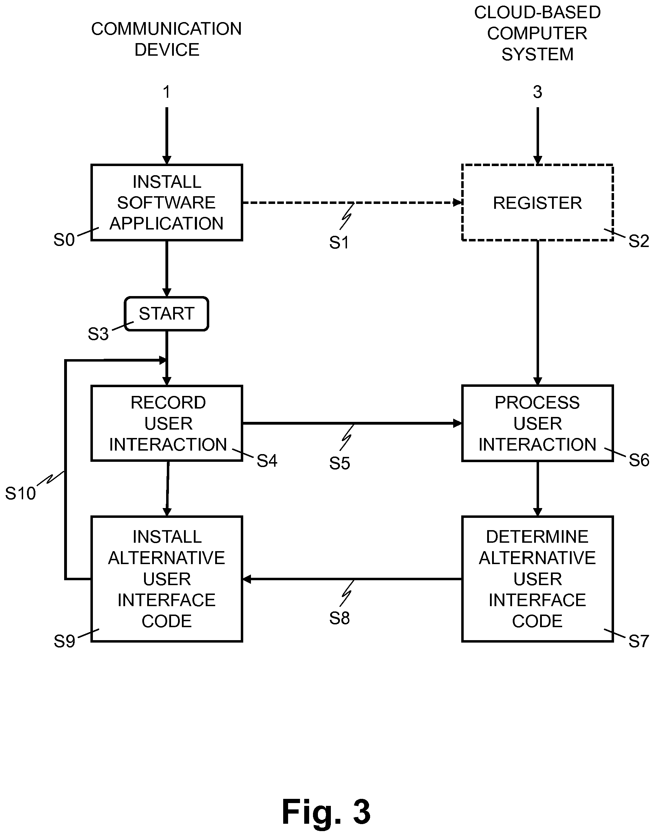

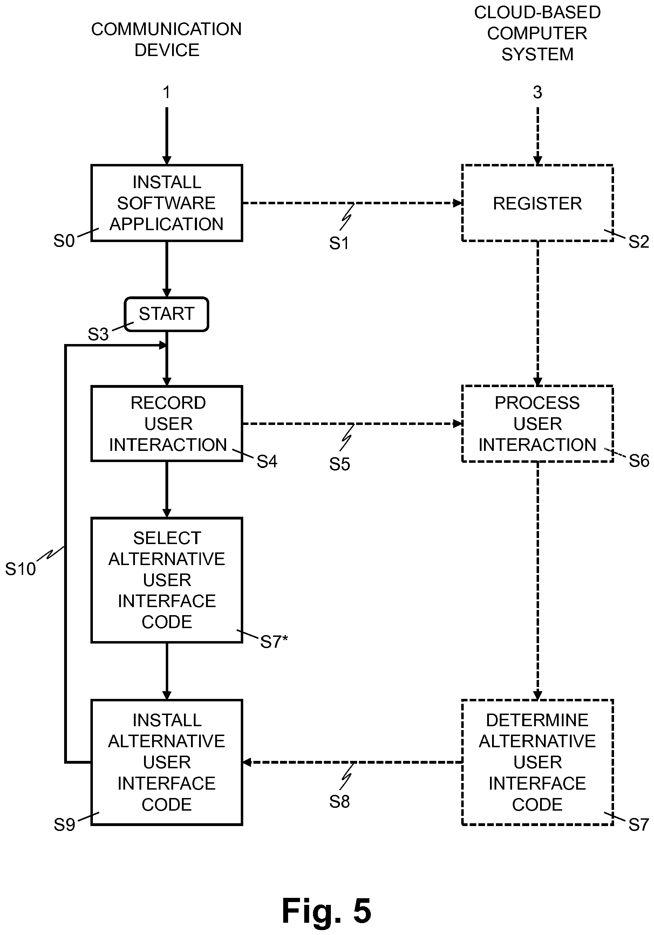

As illustrated in Figures 3 and 5, on step SO the software application 11 is installed on the user's communication device 1. For example, the software application 11 is downloaded from a server, such as a server from an application service provider (e.g. Google Play, or the Apple Store).

In step S1, the software application 11 transmits registration details to a cloud-based computer system 3. The registration details comprise an identifier of the software application 11, such that the specific software application 11 and its version can be identified, and an identifier of the communication device 1, such that a particular hardware and software configuration of the communication device 1 can be identified.

In step S2, the software application 11 is registered in the cloud-based computer system 3, by recording the transmitted identifiers in a log file or in an entry in a database.

In step S3, the software application 11 is started, for instance by the user launching the application in his mobile communication device 1.

In step S4, the customer journey tracking code 110 records the user interaction by recording the user inputs. The records of the user interaction comprise log entries.

In step S5, the records of the user interaction are transmitted to a cloud-based computer system 3. These log entries enable processing and reconstruction of the user interaction with the software application 11, the user interaction taking place via the user interface 100 and the user interface process.

In step S6, this processing takes place in the cloud-based computer system 3. The cloud-based computer system 3 analyzes how the user interacts with the user interface 100.

In step S7, the cloud-based computer system 3 determines whether alternative user interface code 31 would be an improvement and beneficial to the user. More specifically, the cloud-based computer system 3 analyzes how frequently the user interacts with user interface elements, such as control elements and indicator elements. The cloud-based computer system 3 further analyzes which workflows and processes the user performs most frequently, or in which sequence workflows and processes are performed by the user. The cloud-based computer system 3 determines in what order and sequence the user accesses the user interface elements. Alternative user interface code 31 may be an improvement and beneficial to the user, if certain user interface elements, workflows and/or processes which are accessed and used by the user frequently (more frequently than others) are arranged or ordered in an alternate sequence, such as to increase the efficiency of interaction for the user. An alternative user interface may include reordered user interface elements, workflows and/or processes, and/or adjusted and altered page layouts, such as to achieve for the user a more efficient interaction with the software application 11. Alternative user interface code 31 may be also be an improvement and appropriate, if the user has a particular disability and as such requires an alternative user interface code 31 to interact efficiently with the user interface 100, and therefore interact efficiently with the software application 11. For example, a visually impaired user may require larger text sizes and button sizes, or may require interacting with a software application 31 entirely through voice commands. Or, for example, alternative user interface code 31 may be appropriate, if the user uses or prefers a particular language setting in the software application 11 or in their communication device 1, as text orientation in certain languages is vertical top-to-bottom, or horizontally right-to-left. This preferred text direction also leads to preferred patterns in navigating forms and workflows for some users and, thus, using an alternative user interface code 31 provides improvements and more efficiency. In an embodiment, the users may also select from alternative user interface code 31 themselves.

In step S8, the alternative user interface code 31 is transmitted from the cloud-based computer system 3 to the user's communication device 1 via the telecommunications network 2.

In step S9, the alternative user interface code 31 is installed and executed on the communication device 1. The software application 11 then switches from using the user interface code 112 to using the alternative user interface code 31, during which the software application 11 and the function code 111 are not recompiled. This makes the switch quick and efficient.

In step 510, the software application 11 returns to step S4 and the customer journey tracking code 110 records the user interaction.

As illustrated in Figure 5, in step S4, the user interaction is recorded by the customer journey tracking code 110, as described above.

In step S7*, the recommendation code 113, which is installed and executed on the communication device 1 as part of the function code 111 , controls the processor 10, such that the processor 10 selects an alternative user interface code module 12, as described above in connection with step S7, executed by the cloud-based computer system 3.

In step S9, the processor 10 installs the selected alternative user interface code module 12. The alternative user interface code module 12 is selected based on the user's interaction with the user interface 100, as described above, and replaces the currently used user interface code 112.

As illustrated in Figure 5 and described above, user interaction is optionally processed by the cloud-based computer system 3 in step S6, and the cloud-based computer system 3 determines further alternative user interface code 31, in step S7, and transmits it to the communication device 1, in step S8, as described above.

## Claims

1. A method of operating a software application (11) on a processor (10) of a communication device (1), the method comprising:
installing (S0) the software application (11) on the communication device (1), the software application (11) comprising application function code (111) and user interface code (112), the user interface code (112) being configured to control the processor (10) of the communication device (1) to implement a user interface (100) for a user to interact with the software application (11) executing on the processor (10) of the communication device (1), the user interface (100) comprising different forms, layouts and pages, guiding the user through specific business processes in a structured manner as defined by the user interface code (112), and the user interface code (112) being coupled with the separately compiled application function code (111) and executed by the processor (10) in a separate process such that the user interface code (112) is replaceable with alternative user interface code (12, 31), without requiring a recompilation of the application function code (111) and the alternative user interface code (12, 31) for the software application (11) to execute on the processor (10) of the communication device (1) with an alternative user interface implemented by the alternative user interface code (12, 31);
installing and executing on the processor (10) of the communication device (1) a customer journey tracking code (110), the customer journey tracking code (110) recording (S4) user interaction with the software application (11) through the user interface (100) implemented by the user interface code (112);
determining (S7, S7*) alternative user interface code (12, 31), using the user interaction recorded by the customer journey tracking code (110); and
installing (S9) and executing the alternative user interface code (12, 31) on the processor (10) of the communication device (1) for implementing an alternative user interface for the user to interact with the software application (11), wherein the alternative user interface includes reordered user interface elements, workflow and processes, and adjusted and altered page layouts, such as to achieve for the user a more efficient interaction with the software application (11).

2. The method of claim 1, wherein determining (S7) alternative user interface code comprises transmitting (S5) the user interaction recorded by the customer journey tracking code (110) from the communication device (1) via a telecommunications network (2) to a cloud-based computer system (3); determining (S7) in the cloud-based computer system (3) alternative user interface code (31), using the user interaction received from the communication device (1); and transmitting (S8) the alternative user interface code (31) from the cloud-based computer system (3) to the communication device (1).

3. The method of claim 2, wherein determining (S7) the alternative user interface code in the cloud-based computer system (3) comprises the cloud-based computer system (3) determining a user interface type for the user interaction received from the communication device (1); and transmitting (S8) alternative user interface code (31) associated with the user interface type from the cloud-based computer system (3) to the communication device (1).

4. The method of one of claims 2 or 3, wherein the method further comprises the cloud-based computer system (3) storing a log (32) of transmitting alternative user interface code (31) to the communication device (1) of a user.

5. The method of one of claims 1 to 4, wherein the method further comprises storing in the communication device (1) a plurality of modules (12) comprising alternative user interface code, and installing and executing on the processor (10) of the communication device (1) a recommendation code (113); and determining alternative user interface code comprises the recommendation code (113) selecting (S7*) the alternative user interface code from the plurality of modules (12) with alternative user interface code, using the user interaction recorded by the customer journey tracking code (110).

6. The method of one of claims 1 to 5, wherein the method further comprises including the customer journey tracking code (110) in the application function code (111) of the software application (11); and installing the customer journey tracking code (110) is included in installing (S0) the software application (11) on the communication device (1).

7. The method of one of claims 1 to 6, wherein the method further comprises determining disabilities of the user which impair the user's interaction with the software application (11) through the user interface (100); and determining (S7, S7*) the alternative user interface code (12, 31) further includes taking into consideration the disabilities of the user determined.

8. The method of one of claims 1 to 7, wherein recording (S4) user interaction comprises the customer journey tracking code (110) detect and store timing of user interaction commands and types of user interaction commands through the user interface (100).

9. A communication device (1) comprising a processor (10) and software application (11) installed on the communication device (1), the software application (11) comprising application function code (111) and user interface code (112), the user interface code (112) being configured to control the processor (10) of the communication device (1) to implement a user interface (100) for a user to interact with the software application (11) executing on the processor (10) of the communication device (1), the user interface (100) comprising different forms, layouts and pages, guiding the user through specific business processes in a structured manner as defined by the user interface code (112);
wherein the user interface code (112) is coupled with the separately compiled application function code (111) and executed by the processor (10) in a separate process such that the user interface code (112) is replaceable with alternative user interface code (12, 31), without requiring a recompilation of the application function code (111) and the alternative user interface code (12, 31) for the software application (11) to execute on the processor (10) of the communication device (1) with an alternative user interface implemented by the alternative user interface code (12, 31); and
the processor (10) of the communication device (1) is further configured to record (S4) user interaction with the software application (11) through the user interface (100) implemented by the user interface code (11 2), the recorded user interaction making it possible to determine alternative user interface code (12, 31) for controlling the processor (10) of the communication device (1) to implement an alternative user interface for the user to interact with the software application (11), wherein the alternative user interface includes reordered user interface elements, workflow and processes, and adjusted and altered page layouts, such as to achieve for the user a more efficient interaction with the software application (11).

10. The communication device (1) of claim 9, wherein the processor (10) is further configured to transmit (S5) the recorded user interaction via a telecommunications network (2) to a cloud-based computer system (3); to receive (S8) from the cloud-based computer system (3) the alternative user interface code (31), determined by the cloud-based computer system (3) based on the user interaction; and to install (S9) the alternative user interface code (31) received from the cloud-based computer system (3) in the communication device (1).

11. The communication device (1) of one of claims 9 or 10, wherein the communication device (1) further comprises a plurality of modules (12) comprising alternative user interface code; and the processor (10) is further configured to select (S7*) the alternative user interface code from the plurality of modules (12) with alternative user interface code, using the recorded user interaction.

12. The communication device (1) of one of claims 9 to 11, wherein the processor (10) is further configured to determine disabilities of the user which impair the user's interaction with the software application (11) through the user interface (100); and determine (S7*) the alternative user interface code (12) further taking into consideration the disabilities of the user determined.

13. The method of one of claims 9 to 12, wherein the processor (10) is configured to record (S4) the user interaction by detecting and storing timing of user interaction commands and types of user interaction commands through the user interface.

14. A computer program product comprising a non-transient computer-readable medium having stored therein computer program code configured to control a processor (10) of a communication device (1) such that the communication device (1) installs (S0) a software application (11) on the communication device (1), the software application (11) comprising application function code (111) and user interface code (112), the user interface code (112) being configured to control the processor (10) to implement a user interface (100) for a user to interact with the software application (11) executing on the processor (10) of the communication device (1), the user interface (100) comprising different forms, layouts and pages, guiding the user through specific business processes in a structured manner as defined by the user interface code (112), and the user interface code (112) being coupled with the separately compiled application function code (111) and executed by the processor (10) in a separate process such that the user interface code (11 2) is replaceable with alternative user interface code (12, 31), without requiring a recompilation of the application function code (111) and the alternative user interface code (12, 31) for the software application (11) to execute on the processor (10) of the communication device (1) with an alternative user interface implemented by the alternative user interface code (12, 31); and that the communication device (1) records (S4) user interaction with the software application (11) through the user interface (100) implemented by the user interface code (112), the recorded user interaction making it possible to determine alternative user interface code (12, 31) for controlling the processor (10) of the communication device (1) to implement an alternative user interface for the user to interact with the software application (11), wherein the alternative user interface includes reordered user interface elements, workflow and processes, and adjusted and altered page layouts, such as to achieve for the user a more efficient interaction with the software application (11).

15. The computer program product of claim 14, having stored on the non-transient computer-readable medium further computer program code configured to control the processor (10) such that the communication device (1) transmits (S5) the recorded user interaction via a telecommunications network (2) to a cloud-based computer system (3); that the communication device (1) receives (S8) from the cloud-based computer system (3) the alternative user interface code (31), determined (S7) by the cloud-based computer system (3) based on the user interaction; and that the communication device (1) installs (S9) the alternative user interface code (31) received from the cloud-based computer system (3) in the communication device (1).

16. The computer program product of one of claims 14 or 15, having stored on the non-transient computer-readable medium further computer program code configured to control the processor (10) such that the communication device (1) stores a plurality of modules (12) comprising alternative user interface code; and that the communication device (1) selects (S7*) the alternative user interface code from the plurality of modules (12) with alternative user interface code, using the recorded user interaction.

## Patentansprüche

1. Verfahren zum Betreiben einer Software-Anwendung (11) auf einem Prozessor (10) einer Kommunikationsvorrichtung (1), wobei das Verfahren umfasst:
Installieren (S0) der Software-Anwendung (11) auf der Kommunikationsvorrichtung (1), wobei die Software-Anwendung (11) einen Anwendungsfunktionscode (111) und einen Benutzerschnittstellencode (112) umfasst, wobei der Benutzerschnittstellencode (112) dazu ausgelegt ist, den Prozessor (10) der Kommunikationsvorrichtung (1) zu steuern, um eine Benutzerschnittstelle (100) für einen Benutzer zu implementieren, um mit der Software-Anwendung (11), die am Prozessor (10) der Kommunikationsvorrichtung (1) ausgeführt wird, zu interagieren, wobei die Benutzerschnittstelle (100) verschiedene Formulare, Layouts und Seiten umfasst, die den Benutzer in einer strukturierten Weise, wie sie durch den Benutzerschnittstellencode (112) definiert ist, durch spezifische Geschäftsprozesse führen, und wobei der Benutzerschnittstellencode (112) mit dem separat kompilierten Anwendungsfunktionscode (111) gekoppelt ist und durch den Prozessor (10) in einem separaten Prozess ausgeführt wird, so dass der Benutzerschnittstellencode (112) durch einen alternativen Benutzerschnittstellencode (12, 31) ersetzt werden kann, ohne dass eine Neukompilierung des Anwendungsfunktionscodes (111) und des alternativen Benutzerschnittstellencodes (12, 31) erforderlich ist, damit die Software-Anwendung (11) am Prozessor (10) der Kommunikationsvorrichtung (1) mit einer alternativen Benutzerschnittstelle ausgeführt werden kann, die durch den alternativen Benutzerschnittstellencode (12, 31) implementiert wird;
Installieren und Ausführen eines Customer Journey Tracking Codes (110) am Prozessor (10) der Kommunikationsvorrichtung (1), wobei der Customer Journey Tracking Code (110) die Benutzerinteraktion mit der Software-Anwendung (11) über die Benutzerschnittstelle (100), die durch den Benutzerschnittstellencode (112) implementiert wird, aufzeichnet (S4);
Bestimmen (S7, S7*) eines alternativen Benutzerschnittstellencodes (12, 31) unter Verwendung der durch den Customer Journey Tracking Code (110) aufgezeichneten Benutzerinteraktion; und
Installieren (S9) und Ausführen des alternativen Benutzerschnittstellencodes (12, 31) am Prozessor (10) der Kommunikationsvorrichtung (1) zum Implementieren einer alternativen Benutzerschnittstelle für den Benutzer, um mit der Software-Anwendung (11) zu interagieren, wobei die alternative Benutzerschnittstelle neu geordnete Benutzerschnittstellenelemente, Arbeitsabläufe und Prozesse sowie angepasste und geänderte Seitenlayouts beinhaltet, um so für den Benutzer eine effizientere Interaktion mit der Software-Anwendung (11) zu erreichen.

2. Verfahren nach Anspruch 1, wobei das Bestimmen (S7) eines alternativen Benutzerschnittstellencodes folgendes umfasst: das Übertragen (S5) der durch den Customer Journey Tracking Code (110) aufgezeichneten Benutzerinteraktion von der Kommunikationsvorrichtung (1) über ein Telekommunikationsnetzwerk (2) an ein Cloud-basiertes Computersystem (3); das Bestimmen (S7) eines alternativen Benutzerschnittstellencodes (31) im Cloud-basierten Computersystem (3) unter Verwendung der von der Kommunikationsvorrichtung (1) empfangenen Benutzerinteraktion; und das Übertragen (S8) des alternativen Benutzerschnittstellencodes (31) vom Cloud-basierten Computersystem (3) an die Kommunikationsvorrichtung (1).

3. Verfahren nach Anspruch 2, wobei das Bestimmen (S7) des alternativen Benutzerschnittstellencodes im Cloud-basierten Computersystem (3) folgendes umfasst: das Bestimmen eines Benutzerschnittstellentyps für die von der Kommunikationsvorrichtung (1) empfangene Benutzerinteraktion durch das Cloud-basierte Computersystem (3); und das Übertragen (S8) eines alternativen Benutzerschnittstellencodes (31), der dem Benutzerschnittstellentyp zugeordnet ist, vom Cloud-basierten Computersystem (3) an die Kommunikationsvorrichtung (1).

4. Verfahren nach einem der Ansprüche 2 oder 3, wobei das Verfahren ferner umfasst, dass das Cloud-basierte Computersystem (3) ein Protokoll (32) des Übertragens eines alternativen Benutzerschnittstellencodes (31) an die Kommunikationsvorrichtung (1) eines Benutzers speichert.

5. Verfahren nach einem der Ansprüche 1 bis 4, wobei das Verfahren ferner das Speichern einer Mehrzahl von Modulen (12) in der Kommunikationsvorrichtung (1), die einen alternativen Benutzerschnittstellencode umfassen, und das Installieren und Ausführen eines Empfehlungscodes (113) am Prozessor (10) der Kommunikationsvorrichtung (1) umfassen; und das Bestimmen eines alternativen Benutzeroberflächencodes den Empfehlungscode (113) umfasst, der den alternativen Benutzerschnittstellencode aus der Mehrzahl von Modulen (12) mit alternativem Benutzerschnittstellencode unter Verwendung der durch den Customer Journey Tracking Code (110) aufgezeichneten Benutzerinteraktion auswählt (S7*).

6. Verfahren nach einem der Ansprüche 1 bis 5, wobei das Verfahren ferner das Beinhalten des Customer Journey Tracking Codes (110) im Anwendungsfunktionscode (111) der Software-Anwendung (11) umfasst; und das Installieren des Customer Journey Tracking Codes (110) in der Installation (S0) der Software-Anwendung (11) auf der Kommunikationsvorrichtung (1) beinhaltet ist.

7. Verfahren nach einem der Ansprüche 1 bis 6, wobei das Verfahren ferner das Bestimmen von Behinderungen des Benutzers umfasst, die die Interaktion des Benutzers mit der Software-Anwendung (11) über die Benutzerschnittstelle (100) beeinträchtigen; und das Bestimmen (S7, S7*) des alternativen Benutzerschnittstellencodes (12, 31) ferner das Berücksichtigen der bestimmten Behinderungen des Benutzers beinhaltet.

8. Verfahren nach einem der Ansprüche 1 bis 7, wobei das Aufzeichnen (S4) der Benutzerinteraktion umfasst, dass der Customer Journey Tracking Code (110), das Timing von Benutzerinteraktionsbefehlen und Arten von Benutzerinteraktionsbefehlen über die Benutzerschnittstelle (100) erkennt und speichert.

9. Kommunikationsvorrichtung (1), die einen Prozessor (10) und eine Software-Anwendung (11) umfasst, die auf der Kommunikationsvorrichtung (1) installiert ist, wobei die Software-Anwendung (11) einen Anwendungsfunktionscode (111) und einen Benutzerschnittstellencode (112) umfasst, wobei der Benutzerschnittstellencode (112) dazu ausgelegt ist, den Prozessor (10) der Kommunikationsvorrichtung (1) zu steuern, um eine Benutzerschnittstelle (100) für einen Benutzer zu implementieren, damit dieser mit der Software-Anwendung (11) interagieren kann, die am Prozessor (10) der Kommunikationsvorrichtung (1) ausgeführt wird, wobei die Benutzerschnittstelle (100) verschiedene Formulare, Layouts und Seiten umfasst, die den Benutzer auf strukturierte Weise, wie durch den Benutzerschnittstellencode (112) definiert, durch bestimmte Geschäftsprozesse führen;
wobei der Benutzerschnittstellencode (112) mit dem separat kompilierten Anwendungsfunktionscode (111) gekoppelt ist und vom Prozessor (10) in einem separaten Prozess ausgeführt wird, so dass der Benutzerschnittstellencode (112) durch einen alternativen Benutzerschnittstellencode (12, 31) ersetzbar ist, ohne dass eine Neukompilierung des Anwendungsfunktionscodes (111) und des alternativen Benutzerschnittstellencodes (12, 31) erforderlich ist, damit die Software-Anwendung (11) am Prozessor (10) der Kommunikationsvorrichtung (1) mit einer alternativen Benutzerschnittstelle ausgeführt wird, die durch den alternativen Benutzerschnittstellencode (12, 31) implementiert wird; und
der Prozessor (10) der Kommunikationsvorrichtung (1) ferner dazu ausgelegt ist, eine Benutzerinteraktion mit der Software-Anwendung (11) über die Benutzerschnittstelle (100), die durch den Benutzerschnittstellencode (112) implementiert ist, aufzuzeichnen (S4), wobei die aufgezeichnete Benutzerinteraktion es ermöglicht, einen alternativen Benutzerschnittstellencode (12, 31) zum Steuern des Prozessors (10) der Kommunikationsvorrichtung (1) zu bestimmen, um eine alternative Benutzerschnittstelle für den Benutzer zu implementieren, um mit der Software-Anwendung (11) zu interagieren, wobei die alternative Benutzerschnittstelle neu geordnete Benutzerschnittstellenelemente, Arbeitsabläufe und Prozesse sowie angepasste und geänderte Seitenlayouts beinhaltet, um so für den Benutzer eine effizientere Interaktion mit der Software-Anwendung (11) zu erzielen.

10. Kommunikationsvorrichtung (1) nach Anspruch 9, wobei der Prozessor (10) ferner dazu ausgelegt ist, die aufgezeichnete Benutzerinteraktion über ein Telekommunikationsnetzwerk (2) an ein Cloud-basiertes Computersystem (3) zu übertragen (S5); vom Cloud-basierten Computersystem (3) den alternativen Benutzerschnittstellencode (31) zu empfangen (S8), der durch das Cloud-basierte Computersystem (3) basierend auf der Benutzerinteraktion bestimmt wird; und den vom Cloud-basierten Computersystem (3) empfangenen alternativen Benutzerschnittstellencode (31) in der Kommunikationsvorrichtung (1) zu installieren (S9).

11. Kommunikationsvorrichtung (1) nach einem der Ansprüche 9 oder 10, wobei die Kommunikationsvorrichtung (1) ferner eine Mehrzahl von Modulen (12) umfasst, die einen alternativen Benutzeroberflächencode umfassen; und der Prozessor (10) ferner dazu ausgelegt ist, unter Verwendung der aufgezeichneten Benutzerinteraktion den alternativen Benutzeroberflächencode aus der Mehrzahl der Module (12) mit alternativem Benutzeroberflächencode auszuwählen (S7*).

12. Kommunikationsvorrichtung (1) nach einem der Ansprüche 9 bis 11, wobei der Prozessor (10) ferner dazu ausgelegt ist, Behinderungen des Benutzers zu bestimmen, die die Interaktion des Benutzers mit der Software-Anwendung (11) über die Benutzerschnittstelle (100) beeinträchtigen, und den alternativen Benutzerschnittstellencode (12) unter weiterer Berücksichtigung der bestimmten Behinderungen des Benutzers zu bestimmen (S7*).

13. Verfahren nach einem der Ansprüche 9 bis 12, wobei der Prozessor (10) dazu ausgelegt ist, die Benutzerinteraktion durch Erkennen und Speichern des Timings von Benutzerinteraktionsbefehlen und der Arten von Benutzerinteraktionsbefehlen über die Benutzerschnittstelle aufzuzeichnen (S4).

14. Computerprogrammprodukt, das ein nicht flüchtiges computerlesbares Medium umfasst, auf dem Computerprogrammcode gespeichert ist, der dazu ausgelegt ist, einen Prozessor (10) einer Kommunikationsvorrichtung (1) so zu steuern, dass die Kommunikationsvorrichtung (1) eine Software-Anwendung (11) auf der Kommunikationsvorrichtung (1) installiert (S0), wobei die Software-Anwendung (11) einen Anwendungsfunktionscode (111) und einen Benutzerschnittstellencode (112) umfasst, wobei der Benutzerschnittstellencode (112) dazu ausgelegt ist, den Prozessor (10) zu steuern, um eine Benutzerschnittstelle (100) für einen Benutzer zu implementieren, um mit der Software-Anwendung (11), die am Prozessor (10) der Kommunikationsvorrichtung (1) ausgeführt wird, zu interagieren, wobei die Benutzerschnittstelle (100) verschiedene Formulare, Layouts und Seiten umfasst, die den Benutzer in einer strukturierten Weise, wie sie durch den Benutzerschnittstellencode (112) definiert ist, durch spezifische Geschäftsprozesse führen, und wobei der Benutzerschnittstellencode (112) mit dem separat kompilierten Anwendungsfunktionscode (111) gekoppelt ist und durch den Prozessor (10) in einem separaten Prozess ausgeführt wird, so dass der Benutzerschnittstellencode (112) durch einen alternativen Benutzerschnittstellencode (12, 31) ersetzt werden kann, ohne dass eine Neukompilierung des Anwendungsfunktionscodes (111) und des alternativen Benutzerschnittstellencodes (12, 31) erforderlich ist, damit die Software-Anwendung (11) am Prozessor (10) der Kommunikationsvorrichtung (1) mit einer alternativen Benutzerschnittstelle ausgeführt werden kann, die durch den alternativen Benutzerschnittstellencode (12, 31) implementiert wird; und dass die Kommunikationsvorrichtung (1) Benutzerinteraktion mit der Software-Anwendung (11) durch die Benutzerschnittstelle (100), die durch den Benutzerschnittstellencode (112) implementiert ist, aufzeichnet (S4), wobei die aufgezeichnete Benutzerinteraktion es ermöglicht, einen alternativen Benutzerschnittstellencode (12, 31) zum Steuern des Prozessors (10) der Kommunikationsvorrichtung (1) zu bestimmen, um eine alternative Benutzerschnittstelle für den Benutzer zu implementieren, um mit der Software-Anwendung (11) zu interagieren, wobei die alternative Benutzerschnittstelle neu geordnete Benutzerschnittstellenelemente, Arbeitsabläufe und Prozesse sowie angepasste und geänderte Seitenlayouts beinhaltet, um so für den Benutzer eine effizientere Interaktion mit der Software-Anwendung (11) zu erzielen.

15. Computerprogrammprodukt nach Anspruch 14, das auf dem nicht flüchtigen computerlesbaren Medium einen weiteren Computerprogrammcode gespeichert hat, der dazu ausgelegt ist, den Prozessor (10) so zu steuern, dass die Kommunikationsvorrichtung (1) die aufgezeichnete Benutzerinteraktion über ein Telekommunikationsnetzwerk (2) an ein Cloud-basiertes Computersystem (3) überträgt (S5); dass die Kommunikationsvorrichtung (1) vom Cloud-basierten Computersystem (3) den alternativen Benutzerschnittstellencode (31) empfängt (S8), der vom Cloud-basierten Computersystem (3) basierend auf der Benutzerinteraktion bestimmt (S7) wird; und dass die Kommunikationsvorrichtung (1) den vom Cloud-basierten Computersystem (3) empfangenen alternativen Benutzerschnittstellencode (31) in der Kommunikationsvorrichtung (1) installiert (S9).

16. Computerprogrammprodukt nach einem der Ansprüche 14 oder 15, mit einem auf dem nicht flüchtigen computerlesbaren Medium gespeicherten weiteren Computerprogrammcode, der dazu ausgelegt ist, den Prozessor (10) so zu steuern, dass die Kommunikationsvorrichtung (1) eine Mehrzahl von Modulen (12) speichert, die einen alternativen Benutzeroberflächencode umfassen; und dass die Kommunikationsvorrichtung (1) den alternativen Benutzeroberflächencode aus der Mehrzahl von Modulen (12) mit alternativem Benutzeroberflächencode unter Verwendung der aufgezeichneten Benutzerinteraktion auswählt (S7*).

## Revendications

1. Procédé d'exploitation d'une application logicielle (11) sur un processeur (10) d'un dispositif de communication (1), le procédé comprenant :
l'installation (S0) de l'application logicielle (11) sur le dispositif de communication (1), l'application logicielle (11) comprenant un code de fonction d'application (111) et un code d'interface utilisateur (112), le code d'interface utilisateur (112) étant configuré pour commander au processeur (10) du dispositif de communication (1) de mettre en œuvre une interface utilisateur (100) permettant à un utilisateur d'interagir avec l'application logicielle (11) exécutée sur le processeur (10) du dispositif de communication (1), l'interface utilisateur (100) comprenant différents formulaires, mises en page et pages, guidant l'utilisateur à travers des processus commerciaux spécifiques d'une manière structurée définie par le code d'interface utilisateur (112), et le code d'interface utilisateur (112) étant couplé au code de fonction d'application (111) compilé séparément et exécuté par le processeur (10) dans un processus séparé de telle sorte que le code d'interface utilisateur (112) puisse être remplacé par un code d'interface utilisateur de remplacement (12, 31), sans qu'il soit nécessaire de recompiler le code de fonction d'application (111) et le code d'interface utilisateur de remplacement (12, 31) pour que l'application logicielle (11) puisse être exécutée sur le processeur (10) du dispositif de communication (1) avec une interface utilisateur de remplacement mise en œuvre par le code d'interface utilisateur de remplacement (12, 31) ;
l'installation et l'exécution sur le processeur (10) du dispositif de communication (1) d'un code de suivi de parcours de client (110), le code de suivi de parcours de client (110) enregistrant (S4) l'interaction de l'utilisateur avec l'application logicielle (11) par le biais de l'interface utilisateur (100) mise en œuvre par le code d'interface utilisateur (112) ;
la détermination (S7, S7*) d'un code d'interface utilisateur de remplacement (12, 31), à l'aide de l'interaction utilisateur enregistrée par le code de suivi de parcours de client (110) ; et
l'installation (S9) et l'exécution du code d'interface utilisateur de remplacement (12, 31) sur le processeur (10) du dispositif de communication (1) pour mettre en œuvre une interface utilisateur de remplacement permettant à l'utilisateur d'interagir avec l'application logicielle (11), l'interface utilisateur de remplacement comprenant des éléments d'interface utilisateur, un flux de travail et des processus réorganisés, ainsi que des mises en page ajustées et modifiées, de manière à permettre à l'utilisateur d'interagir plus efficacement avec l'application logicielle (11).

2. Procédé selon la revendication 1, dans lequel la détermination (S7) d'un code d'interface utilisateur de remplacement comprend la transmission (S5) de l'interaction d'utilisateur enregistrée par le code de suivi de parcours de client (110) par le dispositif de communication (1) par l'intermédiaire d'un réseau de télécommunications (2) à un système informatique basé sur le cloud (3); la détermination (S7) dans le système informatique basé sur le cloud (3) d'un code d'interface utilisateur de remplacement (31), à l'aide de l'interaction d'utilisateur reçue à partir du dispositif de communication (1); et la transmission (S8) du code d'interface utilisateur de remplacement (31) par le système informatique basé sur le cloud (3) au dispositif de communication (1).

3. Procédé selon la revendication 2, dans lequel la détermination (S7) du code d'interface utilisateur de remplacement dans le système informatique basé sur le cloud (3) comprend la détermination par le système informatique basé sur le cloud (3) d'un type d'interface utilisateur pour l'interaction d'utilisateur reçue à partir du dispositif de communication (1); et la transmission (S8) d'un code d'interface utilisateur de remplacement (31) associé au type d'interface utilisateur du système informatique basé sur le cloud (3) au dispositif de communication (1).

4. Procédé selon l'une des revendications 2 ou 3, le procédé comprenant en outre le stockage par le système informatique basé sur le cloud (3) d'un journal (32) de transmission d'un code d'interface utilisateur de remplacement (31) au dispositif de communication (1) d'un utilisateur.

5. Procédé selon l'une des revendications 1 à 4, le procédé comprenant en outre le stockage dans le dispositif de communication (1) d'une pluralité de modules (12) comprenant un code d'interface utilisateur de remplacement, et l'installation et l'exécution sur le processeur (10) du dispositif de communication (1) d'un code de recommandation (113); et la détermination d'un code d'interface utilisateur de remplacement comprend la sélection (S7*) par le code de recommandation (113) du code d'interface utilisateur de remplacement parmi la pluralité de modules (12) avec un code d'interface utilisateur de remplacement, à l'aide de l'interaction d'utilisateur enregistrée par le code de suivi de parcours de client (110).

6. Procédé selon l'une des revendications 1 à 5, le procédé comprenant en outre l'inclusion du code de suivi de parcours de client (110) dans le code de fonction d'application (111) de l'application logicielle (11) ; et l'installation du code de suivi de parcours de client (110) est incluse dans l'installation (S0) de l'application logicielle (11) sur le dispositif de communication (1).

7. Procédé selon l'une des revendications 1 à 6, le procédé comprenant en outre la détermination d'handicaps de l'utilisateur qui entravent l'interaction de l'utilisateur avec l'application logicielle (11) par le biais de l'interface utilisateur (100); et la détermination (S7, S7*) du code d'interface utilisateur de remplacement (12, 31) comprend en outre la prise en considération des handicaps déterminés de l'utilisateur.

8. Procédé selon l'une des revendications 1 à 7, dans lequel l'enregistrement (S4) de l'interaction d'utilisateur comprend la détection et le stockage par le code de suivi de parcours de client (110) d'un timing des commandes d'interaction utilisateur et de types de commandes d'interaction d'utilisateur par le biais de l'interface utilisateur (100).

9. Dispositif de communication (1) comprenant un processeur (10) et une application logicielle (11) installée sur le dispositif de communication (1), l'application logicielle (11) comprenant un code de fonction d'application (111) et un code d'interface utilisateur (112), le code d'interface utilisateur (112) étant configuré pour commander au processeur (10) du dispositif de communication (1) de mettre en œuvre une interface utilisateur (100) permettant à un utilisateur d'interagir avec l'application logicielle (11) exécutée sur le processeur (10) du dispositif de communication (1), l'interface utilisateur (100) comprenant différents formulaires, mises en page et pages, guidant l'utilisateur à travers des processus commerciaux spécifiques d'une manière structurée définie par le code d'interface utilisateur (112) ;
dans lequel le code d'interface utilisateur (112) est couplé au code de fonction d'application (111) compilé séparément et exécuté par le processeur (10) dans un processus séparé de telle sorte que le code d'interface utilisateur (112) puisse être remplacé par un code d'interface utilisateur de remplacement (12, 31) sans qu'il soit nécessaire de recompiler le code de fonction d'application (111) et le code d'interface utilisateur de remplacement (12, 31) pour que l'application logicielle (11) puisse être exécutée sur le processeur (10) du dispositif de communication (1) avec une interface utilisateur de remplacement mise en œuvre par le code d'interface utilisateur de remplacement (12, 31) ; et
le processeur (10) du dispositif de communication (1) est configuré en outre pour enregistrer (S4) une interaction d'utilisateur avec l'application logicielle (11) par le biais de l'interface utilisateur (100) mise en œuvre par le code d'interface utilisateur (112), l'interaction utilisateur enregistrée permettant de déterminer un code d'interface utilisateur de remplacement (12, 31) pour commander au processeur (10) du dispositif de communication (1) de mettre en œuvre une interface utilisateur de remplacement permettant à l'utilisateur d'interagir avec l'application logicielle (11), l'interface utilisateur de remplacement comprenant des éléments d'interface utilisateur, un flux de travail et des processus réorganisés, ainsi que des mises en page ajustées et modifiées, de manière à ce que l'utilisateur puisse interagir plus efficacement avec l'application logicielle (11).

10. Dispositif de communication (1) selon la revendication 9, dans lequel le processeur (10) est configuré en outre pour transmettre (S5) l'interaction d'utilisateur enregistrée par l'intermédiaire d'un réseau de télécommunications (2) à un système informatique basé sur le cloud (3); recevoir (S8) à partir du système informatique basé sur le cloud (3) le code d'interface utilisateur de remplacement (31), déterminé par le système informatique basé sur le cloud (3) sur la base de l'interaction d'utilisateur; et installer (S9) le code d'interface utilisateur de remplacement (31) reçu à partir du système informatique basé sur le cloud (3) dans le dispositif de communication (1) .

11. Dispositif de communication (1) selon l'une des revendications 9 ou 10, dans lequel le dispositif de communication (1) comprend en outre une pluralité de modules (12) comprenant un code d'interface utilisateur de remplacement; et le processeur (10) est configuré en outre pour sélectionner (S7*) le code d'interface utilisateur de remplacement parmi la pluralité de modules (12) avec un code d'interface utilisateur de remplacement, à l'aide de l'interaction utilisateur enregistrée.

12. Dispositif de communication (1) selon l'une des revendications 9 à 11, dans lequel le processeur (10) est configuré en outre pour déterminer des handicaps de l'utilisateur qui entravent l'interaction de l'utilisateur avec l'application logicielle (11) par le biais de l'interface utilisateur (100); et déterminer (S7*) la prise en compte par le code d'interface utilisateur de remplacement (12) des handicaps déterminés de l'utilisateur.

13. Procédé selon l'une des revendications 9 à 12, dans lequel le processeur (10) est configuré pour enregistrer (S4) l'interaction utilisateur en détectant et en stockant le timing de commandes d'interaction d'utilisateur et des types de commandes d'interaction d'utilisateur par le biais de l'interface utilisateur.

14. Produit de programme d'ordinateur comprenant un support non transitoire lisible par ordinateur sur lequel est stocké un code de programme d'ordinateur configuré pour commander un processeur (10) d'un dispositif de communication (1) de telle sorte que le dispositif de communication (1) installe (S0) une application logicielle (11) sur le dispositif de communication (1), l'application logicielle (11) comprenant un code de fonction d'application (111) et un code d'interface utilisateur (112), le code d'interface utilisateur (112) étant configuré pour commander au processeur (10) de mettre en œuvre une interface utilisateur (100) permettant à un utilisateur d'interagir avec l'application logicielle (11) exécutée sur le processeur (10) du dispositif de communication (1), l'interface utilisateur (100) comprenant différents formulaires, mises en page et pages, guidant l'utilisateur à travers des processus commerciaux spécifiques d'une manière structurée définie par le code d'interface utilisateur (112), et le code d'interface utilisateur (112) étant couplé avec le code de fonction d'application (111) compilé séparément et exécuté par le processeur (10) dans un processus séparé de telle sorte que le code d'interface utilisateur (112) puisse être remplacé par un code d'interface utilisateur de remplacement (12, 31), sans qu'il soit nécessaire de recompiler le code de fonction d'application (111) et le code d'interface utilisateur de remplacement (12, 31) pour que l'application logicielle (11) puisse être exécutée sur le processeur (10) du dispositif de communication (1) avec une interface utilisateur de remplacement mise en œuvre par le code d'interface utilisateur de remplacement (12, 31); et que le dispositif de communication (1) enregistre (S4) l'interaction d'utilisateur avec l'application logicielle (11) par le biais de l'interface utilisateur (100) mise en œuvre par le code d'interface utilisateur (112), l'interaction d'utilisateur enregistrée permettant de déterminer un code d'interface utilisateur de remplacement (12, 31) pour commander au processeur (10) du dispositif de communication (1) de mettre en œuvre une interface utilisateur de remplacement permettant à l'utilisateur d'interagir avec l'application logicielle (11), l'interface utilisateur de remplacement comprenant des éléments d'interface utilisateur, un flux de travail et des processus réorganisés, ainsi que des mises en page ajustées et modifiées, permettant à l'utilisateur d'interagir plus efficacement avec l'application logicielle (11).

15. Produit de programme d'ordinateur selon la revendication 14, ayant stocké sur le support non transitoire lisible par ordinateur un code de programme d'ordinateur supplémentaire configuré pour commander le processeur (10) de telle sorte que le dispositif de communication (1) transmette (S5) l'interaction d'utilisateur enregistrée par l'intermédiaire d'un réseau de télécommunications (2) à un système informatique basé sur le cloud (3); le dispositif de communication (1) reçoive (S8) du système informatique basé sur le cloud (3) le code d'interface utilisateur de remplacement (31), déterminé (S7) par le système informatique basé sur le cloud (3) sur la base de l'interaction d'utilisateur; et le dispositif de communication (1) installe (S9) le code d'interface utilisateur de remplacement (31) reçu à partir du système informatique basé sur le cloud (3) dans le dispositif de communication (1).

16. Produit de programme d'ordinateur selon l'une des revendications 14 ou 15, ayant stocké en outre sur le support non transitoire lisible par ordinateur un code de programme d'ordinateur configuré pour commander le processeur (10) de telle sorte que le dispositif de communication (1) stocke une pluralité de modules (12) comprenant un code d'interface utilisateur de remplacement; et le dispositif de communication (1) sélectionne (S7*) le code d'interface utilisateur de remplacement parmi la pluralité de modules (12) avec un code d'interface utilisateur de remplacement, en utilisant l'interaction utilisateur enregistrée.
